# EUROPEAN PATENT SPECIFICATION

(11) **EP 2 461 630 B1**
(45) Date of publication and mention of the grant of the patent: **28.03.2018**
(21) Application number: 11746856.1
(22) Date of filing: 25.02.2011
(51) Int. Cl.: H04W 40/02

(54) **METHOD AND MOBILE COMMUNICATION SYSTEM FOR PROCESSING LOCAL CALLS**
VERFAHREN UND MOBILKOMMUNIKATIONSSYSTEM ZUR VERARBEITUNG LOKALER RUFE
PROCÉDÉ ET SYSTÈME DE COMMUNICATION MOBILE POUR TRAITEMENT D'APPELS LOCAUX

(30) Priority: 26.02.2010 CN 201010135168
(43) Date of publication of application: 06.06.2012
(73) Proprietor: ZTE Corporation, Shenzhen, Guangdong 518057 (CN)
(72) Inventor: LI, Jing, Shenzhen City Guangdong Province 518057 (CN); WANG, Xinhui, Shenzhen City Guangdong Province 518057 (CN)
(74) Representative: Novagraaf Technologies
(86) International application number: PCT/CN2011/071313
(87) International publication number: WO 2011/103814

(56) References cited:
- CN-A- 101 159 905
- CN-A- 101 325 795
- CN-A- 101 431 783
- CN-A- 101 541 096
- "3rd Generation Partnership Project;Technical Specification Group TSG CT;Local Call Local Switch System Impacts;Feasibility Study;(Release 9)", 3GPP DRAFT; C4-100118_RM, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. CT WG4, no. Shenzhen; 20100112, 25 January 2010 (2010-01-25), XP050410793, [retrieved on 2010-01-25]

## Description

### Technical Field

The present invention relates to a mobile communication field, and more especially, to a method and a mobile communication system for processing local calls.

### Background of the Related Art

In the existing Global System for Mobile Communications (GSM), the A interface is adopted to perform a communication between Mobile Switching Center Server (MSC Server) and Base Station Controller (BSC), and Mobile Station (MS) and Base Transceiver Station (BTS) perform a communication through an air interface, namely Um interface. In addition, the BTS and BSC are connected through an Abis interface. Furthermore, the BSC and BTS constitute a Base Station Subsystem (BSS).

The calling flow and called flow in the GSM system at present will transfer the user plane voice of one calling party to a Media Gateway (MGW) through the BSS, and then the MGW transfers the user plane voice to a BSS of the opposite end, even if the calling party and called party are under the same BSS. However, the situation of a large number of local calls exists in the practical GSM network, that is, the calling party and called party are under the same BTS, or belong to different BTS under the same BTS cluster, or are under the same BSC. For these local calls, if the current call processing flow is continued to be used, the following problems will arise.

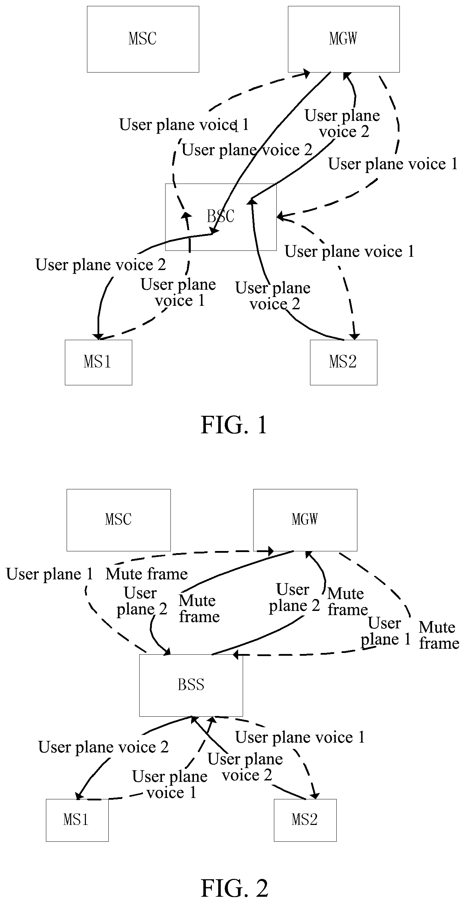

For calls under the same BTS, the situation of the user plane voice of one calling party being transferred to a BSC through an Abis interface of BTS, and then the BSC transferring the user plane voice to a MGW through an A interface, and then the MGW transferring the user plane voice to the original BSC through the A interface, and then the original BSC transferring the user plane voice to the original BTS will arise, which leads to a waste of the transmission resources of Abis interface and A interface;
for calls between different BTS under the same BTS cluster, the situation of the user plane
voice of one calling party being transferred to a control BTS of the BTS cluster through an Abis interface of BTS, and then the control BTS transferring the user plane voice to a BSC through an Abis interface of control BTS, and then the BSC transferring the user plane voice to a MGW through an A interface, and then the MGW transferring the user plane voice to the original BSC through the A interface, and then the original BSC transferring the user plane voice to the above control BTS, and then the above control BTS transferring the user plane voice to the original BTS will arise, which leads to a waste of the transmission resources of Abis interface between the above control BTS and BSC, and also wastes the transmission resources of A interface;
for calls under the same BSC as shown in FIG. 1, the situation of a BSC firstly transferring the user plane voice to a MGW through an A interface, and then the MGW transferring the user plane voice to the BSC through the A interface will arise, which leads to a waste of the transmission resources of A interface.

The document, "3rd generation partnership project; technical specification group TSGCT; local call local switch system impacts; feasibility study; (Release 9)", 3GPP DRAFT; C4-100118_RM, 3GPP, MOBILE COMPETENCE CENTRE; 650, ROUTE DES LUCIOLES; F-06921 SOPHIA=ANTIPOLIS CEDEX; FRANCE, vol. CT WG4, no. Shenzhen; 20100112, 2010-01-25, XP050410793, has disclosed the related art of the present invention.

### Summary of the Invention

The technical problem to be solved by the present invention, which is defined by the independent claims together with their dependent claims, is to provide a method and a mobile communication system for processing local calls, to save the transmission resources of A interface.

To solve the foregoing technical problem, the present invention provides a method for processing local calls, which comprises:
a core network sending indication information to an access network for indicating the access network to send call voice data to the core network when using a local switching function;
the access network performing a local switching after receiving the indication information, and sending the call voice data to the core network; and
the core network receiving the call voice data sent by the access network, and sending mute frames to the access network;
the above method can further be characterized in that:
   the core network comprises a Mobile Switching Center (MSC) and a Media Gateway (MGW), and the step of the core network sending indication information to the access network comprises: the MSC sending the indication information when determining that the local switching is allowed to be utilized for established calls and needing call voice data; the step of the core network receiving the call voice data sent by the access network and sending mute frames to the access network comprises: the MGW receiving the call voice data and sending the mute frame;
   the access network comprises a Base Station Subsystem (BSS), and the step of the access network performing a local switching after receiving the indication information and sending call voice data to the core network comprises: the BSS receiving the indication information and performing the local switching, and sending the voice data to the MGW;
   the method further comprises: the BSS receiving and discarding the mute frame sent by the MGW.The above method can further be characterized in that:
      the above method further comprises: after the MSC sends indication information to the BSS, sending information for indicating the MGW to send the mute frame or indicating that the BSS has used the local switching function to the MGW;
      the step of the MGW sending the mute frame comprises: the MGW sending the mute frame to the BSS according to the information for indicating the MGW to send the mute frame or indicating that the BSS has used the local switching function.

The above method can further be characterized in that:
a circumstance of needing to obtain the call voice data comprises a lawful interception.

The above method can further be characterized in that:
the indication information is an indicator sent through an existing message or a newly added message.

To solve the foregoing technical problem, the present invention also provides a mobile communication system, which comprises a core network and an access network, wherein:
the core network is configured to: send indication information to the access network for indicating the access network to send call voice data to the core network when using a local switching function; and receive the call voice data sent by the access network and send mute frames to the access network;
the access network is configured to: receive the indication information, and perform a local switching according to the indication information, and send the call voice data to the core network;
the above system can further be characterized in that:
   The core network comprises a Mobile Switching Center (MSC) and a Media Gateway (MGW), and the access network comprises a Base Station Subsystem (BSS) connected with the MSC and MGW;
   the MSC is configured to: send the indication information to the BSS when determining that the local switching is allowed to be utilized for established calls and needing call voice data;
   the MGW is configured to: receive the call voice data sent by the BSS and send the mute frame to the BSS;
   the BSS is configured to: receive the indication information, and perform the local switching according to the indication information, and send the call voice data to the MGW;
   the BSS is further configured to receive and discard the mute frame sent by the MGW.

The above system can further be characterized in that:
the MSC is further configured to: after sending the indication information to the BSS, send information for indicating the MGW to send the mute frame or indicating that the BSS has used the local switching function to the MGW;
the MGW is configured to: send the mute frame to the BSS according to the information for indicating the MGW to send the mute frame or indicating that the BSS has used the local switching function.

The above system can further be characterized in that:
a circumstance of the core network needing to obtain the call voice data comprises a lawful interception.

The above system can further be characterized in that:
the indication information is an indicator sent through an existing message or a newly added message.

In the method and system of the present invention, when the core network determines that the local switching is allowed to be utilized for the established calls and needs to obtain the call voice data, the core network sends the indication information to the access network which is responsible for the local switching, thereby satisfying the service requirement of a specified circumstance (e.g. a lawful interception) when saving the resources of A interface at the same time.

### Brief Description of Drawings

FIG. 1 is a schematic diagram of the user plane voice transmission between the MS, BSC and MGW in the related art.
FIG. 2 is a schematic diagram of the user plane voice transmission between the MS, BSS and MGW after implementing the local switching, wherein the voice data is not sent to the core network;
FIG. 3 is a schematic diagram of the user plane voice transmission between the MS, BSS and MGW after implementing the local switching, wherein the voice data is sent to the core network;
FIG. 4 is a flow schematic diagram of the method for processing local calls according to the present invention;
FIG. 5 is a schematic diagram of the user plane voice transmission between the MS, BSS and MGW after implementing the local switching according to the present invention, wherein the voice data is sent to the core network;
FIG. 6 is a schematic diagram of the MSC sending an indicator which allows for performing the local switching and sending voice data to the core network to the BSS through the existing messages;
FIG. 7 is a schematic diagram of the MSC sending an indicator which allows for performing the local switching and sending voice data to the core network to the BSS through the newly added messages.

### Preferred Embodiments of the Present Invention

In order to solve the problem of wasting the transmission resources of A interface, it has been studied to transfer user voice to the MGW by a way of local switching without passing through A interface. As shown in FIG. 2, for calls under the same BSS, a MSC needs to judge whether the calls are allowed to use a local switching function, and the BSS receives that the local switching function is allowed by MSC for usage, and then it directly performs the switching of the voice data of both parties in the BSS without transfering the voice data to the MGW via A interface. The BSS transfers mute frames to the MGW, and the MGW returns the received mute frame to the BSS, and the BSS will discard the mute frame received from the MGW after using the local switching function, thereby achieving the purpose of saving the bandwidth of A bis interface and A interface.

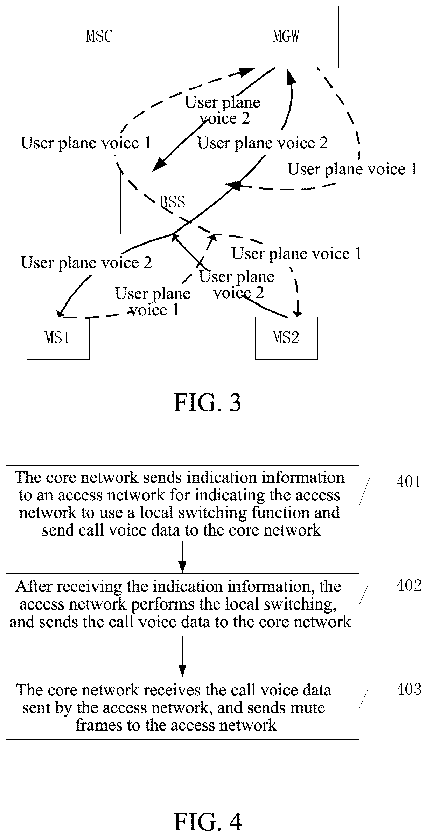

However, in certain scenarios, such as for calls which require lawful interceptions, the core network needs to be able to receive call voice data of both parties. As shown in FIG. 3, the BSS still needs to transfer user voice data to the MGW, thereby leading that the purpose of saving bandwidth can't be achieved through sending mute frames at the A interface.

The main idea of the method and mobile communication system for processing local calls according to the present invention is: when determining that the local switching is allowed to be utilized for the established calls and needing to obtain call voice data, the core network sends indication information to the access network which is responsible for the local switching, thereby satisfying the service requirement of a specified circumstance (e.g. a lawful interception) and saving the resources of A interface.

As shown in FIG. 4, the method for processing local calls according to the present invention comprises the following steps.

Step 401: a core network sends indication information to an access network for indicating the access network to use the local switching function and send call voice data to the core network;
the applicable scenario of the present invention is that the core network determines that the established calls are local calls and needs to obtain call voice data. A circumstance of needing to obtain call voice data comprises a lawful interception.

The indication information is an indicator sent through the existing messages or newly added messages.

Step 402: after receiving the indication information, the access network directly performs the switching of the call voice data of the calling and called parties, that is, it performs the local switching and sends the call voice data to the core network.

Step 403: the core network receives the call voice data sent by the access network, and sends mute frames to the access network.

When using the local switching function, in the prerequisite that preferentially the timeliness of switching is ensured and the call quality is satisfied, the access network sends the call voice data to the core network in real time or regularly, that is, it duplicates the voice data and sends the duplicated voice data to the core network in the case that the normal local switching is not influenced. Specifically, the access network duplicates the voice data of the uplink users when performing the local switching on the received voice data of the uplink users, and sends it to the core network according to the method in the existing technology.

The access network receives and discards the mute frame sent by the core network.

The method of the present invention is applicable to the mobile communication system, such as the Global System for Mobile Communications (GSM) and Universal Mobile Telecommunications System (UMTS). The method of the present invention will be further described below, taking the GSM as an example.

In the GSM system, the core network comprises a Mobile Switching Center (MSC) and a Media Gateway (MGW), and the MSC sends the indication information when determining that the local switching is allowed to be utilized for the established calls and needing the call voice data, and the MGW receives the call voice data and sends mute frames; the access network comprises a Base Station Subsystem (BSS), and the BSS performs the local switching, sends call voice data to the MGW, and receives and discards the mute frame.

The MSC sends the indication information to the BSS, and then sends information for indicating the MGW to send the mute frame to the MGW, and the MGW sends the mute frame to the BSS according to the information.

After adopting the present invention, when the core network needs to receive user voice data, the local switching function still can be used for saving the transmission resources of A bis interface and A interface.

Below the technical scheme of the present invention will be further described with reference to a specific network element and the method for processing local calls according to the present invention comprises the following steps.
(1) when the local switching function is used and call voice data is required to be sent to MGW, a MSC sends indication information to a BSS, and informs the BSS to send the call voice data to a core network when the local switching function is used.

The MSC sends the indication information to the BSS through the following two ways.

### Way 1: existing message

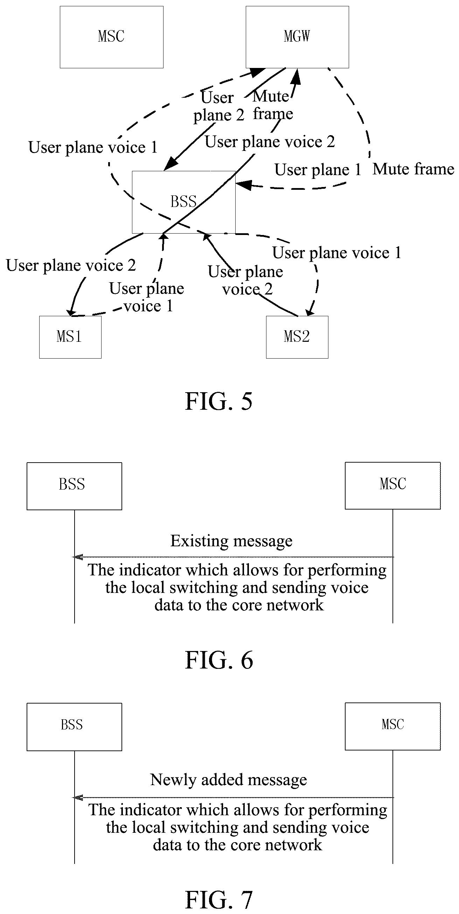

As shown in FIG. 5, the existing message sent by the MSC to the BSS, such as the assignment request message, includes an indicator which allows for performing the local switching and needing to transfer user voice data to the core network. The indicator format can be shown in FIG. 1, wherein, the indicator occupies one bit and is able to indicate that the local switching is allowed and user voice data is required to be transferred to the core network, or indicate that the local switching is allowed but user voice data is not required to be transferred to the core network.

**Table 1 the indicator format of transferring user data to the core network**

| | | | | | | | | |
|---|---|---|---|---|---|---|---|---|
| 8 | 7 | 6 | 5 | 4 | 3 | 2 | 1 | Length |
| Reserved | | | | | | | bit 1 | 1 byte |

### Way 2: newly added message

As shown in FIG. 6, a MSC sends the message to a BSS through a newly added message, and the newly added message is used for indicating an indicator that the BSS is allowed to perform the local switching and voice data is transferred to the core network. The indicator format can be shown in FIG. 1, wherein, the indicator occupies one bit and is able to indicate that the local switching is allowed and user voice data is required to be transferred to the core network, or indicate that the local switching is allowed but user voice data is not required to be transferred to the core network.
(2) when using the local switching function, the BSS still sends the call voice data to the core network through A interface in real time or regularly after receiving the indication information as shown in FIG. 5;
   that is, when using the local switching function, the BSS sends the uplink voice data of user to the MGW through the A interface in real time or regularly according to the way of not using the local switching.
(3) the MGW receives the call voice data sent by the BSS, and send mute frames to the BSS as shown in FIG. 5;
   the MSC sends indication information to the BSS, and then sends information for indicating the MGW to send the mute frame or indicating that the BSS has used the local switching function to the MGW, and the downlink data sent by the MGW to BSS according to the information, is not the user voice data any more but the mute frame. The mute frame can be generated by the MGW voluntarily.
(4) the BSS receives and discards the mute frame sent by the MGW which is received from the A interface after using the local switching function.

In the above step (4), the BSS discards the mute frame sent by the MGW which is received from the A interface after using the local switching function, which can adopt the following ways.

Way 1, after using the local switching function, the BSS discards all data received from the user plane of A interface.

Way 2, after using the local switching function, the BSS determines whether the data received from the user plane of A interface are mute frames, if they are mute frames, it discards the mute frames.

In order to implement the above method, the present invention also provides a mobile communication system, which comprises a core network and an access network, wherein what is related to the present invention is that:
the core network is used for sending indication information to an access network for indicating the access network to send call voice data to the core network when using a local switching function; and also used for receiving the call voice data sent by the access network and sending mute frames to the access network; and
the access network is used for receiving the indication information, and directly performing the switching of the call voice data of the calling and called parties according to the indication information, and sending the call voice data to the core network.

The access network sends the call voice data to the core network in real time or regularly.

Specifically, the core network comprises a Mobile Switching Center (MSC) and a Media Gateway (MGW), and the access network comprises a Base Station Subsystem (BSS) connected with the MSC and MGW, and the MSC sends indication information to the BSS when determining that the local switching is allowed to be utilized for the established calls and needing the call voice data, and the MGW receives the call voice data sent by the BSS and sends mute frames to the BSS; the BSS receives the indication information, performs the switching, and sends the call voice data to the MGW.

The MSC sends the indication information to the BSS, and then also sends information for indicating the MGW to send mute frames or indicating that the BSS has used the local switching function to the MGW, and the MGW sends the mute frame to the BSS according to the information.

The indication information is an indicator sent through the existing messages or newly added messages.

The BSS is connected with the MSC and MGW through A interface, and discards all data received from a user plane of A interface or only discards the data judged to be mute frames after using the local switching function.

A circumstance of the core network needing to obtain call voice data mentioned in the present invention comprises a lawful interception.

Certainly, the present invention also can have other various examples, without departing from the essence of the present invention, those skilled in the art can certainly make different kinds of corresponding changes and transformations according to the present invention, but all these corresponding changes and transformations shall all fall into the protection scope of the appended claims of the present invention.

### Industrial Applicability

In the method and system of the present invention, when determining that the local switching is allowed to be utilized for the established calls and needing to obtain call voice data, the core network sends indication information to the access network which is responsible for the local switching, thereby satisfying the service requirement of a specified circumstance (e.g. a lawful interception) and saving the resources of A interface.

## Claims

1. A method for processing local calls, the method comprising:
a core network sending (401) indication information to an access network for indicating the access network to send call voice data to the core network when using a local switching function;
the access network performing (402) a local switching after receiving the indication information, and sending (402) the call voice data to the core network; and
the core network receiving (403) the call voice data sent by the access network, and sending (403) mute frames to the access network;
wherein the method is **characterized in that**:
the core network comprises a Mobile Switching Center (MSC) and a Media Gateway (MGW), and the step of the core network sending indication information to the access network comprises: the MSC sending the indication information when determining that the local switching is allowed to be utilized for established calls and needing the call voice data; the step of the core network receiving the call voice data sent by the access network and sending the mute frame to the access network comprises: the MGW receiving the call voice data and sending the mute frame;
the access network comprises a Base Station Subsystem (BSS), and the step of the access network performing the local switching after receiving the indication information and sending the call voice data to the core network comprises: the BSS receiving the indication information and performing the local switching, and sending the voice data to the MGW;
the method further comprises: after the BSS uses the local switching function, the BSS receiving and discarding the mute frame sent by the MGW.

2. The method according to claim 1, the method further comprises: after the MSC sends the indication information to the BSS, sending information for indicating the MGW to send the mute frame or indicating that the BSS has used the local switching function to the MGW;
the step of the MGW sending the mute frame comprises: the MGW sending the mute frame to the BSS according to the information for indicating the MGW to send the mute frame or indicating that the BSS has used the local switching function.

3. The method according to claims 1 or 2, wherein, a circumstance of needing to obtain the call voice data comprises a lawful interception.

4. The method according to claims 1 or 2, wherein, the indication information is an indicator sent through an existing message or a newly added message.

5. A mobile communication system, comprising a core network and an access network, wherein:
the core network is configured to: send indication information to the access network for indicating the access network to send call voice data to the core network when using a local switching function; and receive the call voice data sent by the access network and send mute frames to the access network;
the access network is configured to: receive the indication information, and perform a local switching according to the indication information, and send the call voice data to the core network;
wherein the mobile communication system is **characterized in that**:
the core network comprises a Mobile Switching Center (MSC) and a Media Gateway (MGW), and the access network comprises a Base Station Subsystem (BSS) connected with the MSC and MGW;
the MSC is configured to: send the indication information to the BSS when determining that the local switching is allowed to be utilized for established calls and needing the call voice data;
the MGW is configured to: receive the call voice data sent by the BSS and send the mute frame to the BSS;
the BSS is configured to: receive the indication information, and perform the local switching according to the indication information, and send the call voice data to the MGW; after the BSS uses the local switching function, the BSS is further configured to receive and discard the mute frame sent by the MGW.

6. The mobile communication system according to claim 5, wherein,
the MSC is further configured to: after sending the indication information to the BSS, send information for indicating the MGW to send the mute frame or indicating that the BSS has used the local switching function to the MGW;
the MGW is configured to send the mute frame to the BSS according to the information for indicating the MGW to send the mute frame or indicating that the BSS has used the local switching function.

7. The mobile communication system according to claims 5 or 6, wherein, a circumstance of the core network needing to obtain the call voice data comprises a lawful interception.

8. The mobile communication system according to claims 5 or 6, wherein, the indication information is an indicator sent through an existing message or a newly added message.

## Patentansprüche

1. Verfahren zum Verarbeiten von Ortsgesprächen, wobei das Verfahren umfasst:
Senden (401), durch ein Kernnetz, von Anzeigeinformationen an ein Zugangsnetz, um dem Zugangsnetz anzuzeigen, Sprachanrufdaten an das Kernnetz zu senden, wenn eine Ortsvermittlungsfunktion verwendet wird;
Vornehmen (402), durch das Zugangsnetz, einer Ortsvermittlung nach Empfangen der Anzeigeinformationen, und Senden (402) der Sprachanrufdaten an das Kernnetz; und
Empfangen (403), durch das Kernnetz, der vom Zugangsnetz gesendeten Sprachanrufdaten und Senden (403) von stummen Rahmen an das Zugangsnetz;
wobei das Verfahren **dadurch gekennzeichnet ist, dass**:
das Kernnetz ein Mobile Switching Center (MSC) und einen Media Gateway (MGW) umfasst, und der Schritt des Sendens von Anzeigeinformationen durch das Kernnetz an das Zugangsnetz umfasst: Senden der Anzeigeinformationen durch das MSC, wenn bestimmt wird, dass die Ortsvermittlung für hergestellte Gespräche verwendet werden darf und die Sprachanrufdaten benötigt; der Schritt des Empfangens der vom Zugangsnetz gesendeten Sprachanrufdaten durch das Kernnetz und Sendens des stummen Rahmens an das Zugangsnetz umfasst: Empfangen der Sprachanrufdaten und Senden des stummen Rahmens durch den MGW;
das Zugangsnetz ein Basisstationssubsystem (BSS) umfasst, und der Schritt des Vornehmens der Ortsvermittlung durch das Zugangsnetz nach Empfangen der Anzeigeinformationen und Sendens der Sprachanrufdaten an das Kernnetz umfasst: Empfangen der Anzeigeinformationen durch das BSS und Vornehmen der Ortsvermittlung, und Senden der Sprachdaten an den MGW;
das Verfahren weiter umfasst: nachdem das BSS die Ortsvermittlungsfunktion verwendet, Empfangen und Verwerfen, durch das BSS, des vom MGW gesendeten stummen Rahmens.

2. Verfahren nach Anspruch 1, wobei das Verfahren weiter umfasst: nachdem das MSC die Anzeigeinformationen an das BSS sendet, Senden von Informationen, um dem MGW anzuzeigen, den stummen Rahmen zu senden, oder anzuzeigen, dass das BSS die Ortsvermittlungsfunktion zum MGW verwendet hat;
der Schritt des Sendens des stummen Rahmens durch den MGW umfasst: Senden des stummen Rahmens durch den MGW an das BSS gemäß den Informationen, um dem MGW anzuzeigen, den stummen Rahmen zu senden, oder anzuzeigen, dass das BSS die Ortsvermittlungsfunktion verwendet hat.

3. Verfahren nach den Ansprüchen 1 oder 2, wobei ein Umstand, die Sprachanrufdaten erhalten zu müssen, eine rechtmäßige Überwachung umfasst.

4. Verfahren nach den Ansprüchen 1 oder 2, wobei die Anzeigeinformationen eine Anzeige sind, die über eine bestehende Nachricht oder eine neu hinzugefügte Nachricht gesendet wird.

5. Mobilkommunikationssystem, umfassend ein Kernnetz und ein Zugangsnetz, wobei:
das Kernnetz dazu ausgebildet ist: Anzeigeinformationen an das Zugangsnetz zu senden, um dem Zugangsnetz anzuzeigen, Sprachanrufdaten an das Kernnetz zu senden, wenn eine Ortsvermittlungsfunktion verwendet wird; und die vom Zugangsnetz gesendeten Sprachanrufdaten zu empfangen und stumme Rahmen an das Zugangsnetz zu senden;
das Zugangsnetz dazu ausgebildet ist: die Anzeigeinformationen zu empfangen und eine Ortsvermittlung gemäß den Anzeigeinformationen vorzunehmen, und die Sprachanrufdaten an das Kernnetz zu senden;
wobei das Mobilkommunikationssystem **dadurch gekennzeichnet ist, dass**:
das Kernnetz ein Mobile Switching Center (MSC) und einen Media Gateway (MGW) umfasst, und das Zugangsnetz ein Basisstationssubsystem (BSS) umfasst, das mit dem MSC und MGW verbunden ist;
das MSC dazu ausgebildet ist: die Anzeigeinformationen an das BSS zu senden, wenn bestimmt wird, dass die Ortsvermittlung für hergestellte Gespräche verwendet werden darf und die Sprachanrufdaten benötigt;
der MGW dazu ausgebildet ist: die vom BSS gesendeten Sprachanrufdaten zu empfangen und den stummen Rahmen an das BSS zu senden;
das BSS dazu ausgebildet ist: die Anzeigeinformationen zu empfangen und die Ortsvermittlung gemäß den Anzeigeinformationen vorzunehmen, und die Sprachanrufdaten an den MGW zu senden;
nachdem das BSS die Ortsvermittlungsfunktion verwendet, das BSS weiter dazu ausgebildet ist, den vom MGW gesendeten stummen Rahmen zu empfangen und zu verwerfen.

6. Mobilkommunikationssystem nach Anspruch 5, wobei das MSC weiter dazu ausgebildet ist: nach Senden der Anzeigeinformationen an das BSS Informationen zu senden, um dem MGW anzuzeigen, den stummen Rahmen zu senden, oder anzuzeigen, dass das BSS die Ortsvermittlungsfunktion zum MGW verwendet hat;
der MGW dazu ausgebildet ist, den stummen Rahmen gemäß den Informationen, um dem MGW anzuzeigen, den stummen Rahmen zu senden, oder anzuzeigen, dass das BSS die Ortsvermittlungsfunktion verwendet hat, an das BSS zu senden.

7. Mobilkommunikationssystem nach den Ansprüchen 5 oder 6, wobei ein Umstand, in dem das Kernnetz die Sprachanrufdaten erhalten muss, eine rechtmäßige Überwachung umfasst.

8. Mobilkommunikationssystem nach den Ansprüchen 5 oder 6, wobei die Anzeigeinformationen eine Anzeige sind, die über eine bestehende Nachricht oder eine neu hinzugefügte Nachricht gesendet wird.

## Revendications

1. Procédé pour le traitement d'appels locaux, le procédé comprenant :
la transmission (401) par un réseau central d'informations d'indication à un réseau d'accès pour indiquer au réseau d'accès de transmettre des données vocales d'appel au réseau central lors de l'utilisation d'une fonction de commutation locale ;
l'exécution (402) par le réseau d'accès d'une commutation locale après la réception des informations d'indication et la transmission (402) des données vocales d'appel au réseau central ; et
la réception (403) par le réseau central des données vocales d'appel transmises par le réseau d'accès et la transmission (403) de trames silencieuses au réseau d'accès ;
dans lequel le procédé est **caractérisé en ce que** :
le réseau central comprend un centre de commutation mobile (MSC) et une passerelle multimédia (MGW), et l'étape de transmission par le réseau central d'informations d'indication au réseau d'accès comprend : la transmission par le MSC d'informations d'indication lors de la détermination que la commutation locale est autorisée à être utilisée pour des appels établis et la nécessité des données vocales d'appel ; l'étape de réception par le réseau central des données vocales d'appel transmises par le réseau d'accès et de transmission de la trame silencieuse au réseau d'accès comprend : la réception par la MGW des données vocales d'appel et la transmission de la trame silencieuse ;
le réseau d'accès comprend un sous-système de station de base (BSS), et l'étape d'exécution par le réseau d'accès de la commutation locale après la réception des informations d'indication et la transmission des données vocales d'appel au réseau central comprend : la réception par la BSS des informations d'indication et l'exécution de la commutation locale, et la transmission des données vocales à la MGW ;
le procédé comprend en outre : après que la BSS utilise la fonction de commutation locale, la réception et le rejet par la BSS de la trame silencieuse transmise par la MGW.

2. Procédé selon la revendication 1, le procédé comprenant en outre : après que le MSC transmet les informations d'indication à la BSS, la transmission d'informations pour indiquer à la MGW de transmettre la trame silencieuse ou indiquer que la BSS a utilisé la fonction de commutation locale à la MGW ;
l'étape de transmission par la MGW de la trame silencieuse comprend : la transmission par la MGW de la trame silencieuse à la BSS en fonction des informations pour indiquer à la MGW de transmettre la trame silencieuse ou indiquer que la BSS a utilisé la fonction de commutation locale.

3. Procédé selon la revendication 1 ou 2, dans lequel une circonstance de nécessité d'obtenir les données vocales d'appel comprend une interception légale.

4. Procédé selon la revendication 1 ou 2, dans lequel les informations d'indication sont un indicateur transmis par le biais d'un message existant ou d'un message nouvellement ajouté.

5. Système de communication mobile, comprenant un réseau central et un réseau d'accès, dans lequel :
le réseau central est configuré pour : transmettre des informations d'indication au réseau d'accès pour indiquer au réseau d'accès de transmettre des données vocales d'appel au réseau central lors de l'utilisation d'une fonction de commutation locale ; et recevoir les données vocales d'appel transmises par le réseau d'accès et transmettre des trames silencieuses au réseau d'accès ;
le réseau d'accès est configuré pour : recevoir les informations d'indication, et effectuer une commutation locale en fonction des informations d'indication, et transmettre les données vocales d'appel au réseau central ;
dans lequel le système de communication mobile est **caractérisé en ce que** :
le réseau central comprend un centre de commutation mobile (MSC) et une passerelle multimédia (MGW), et le réseau d'accès comprend un sous-système de station de base (BSS) connecté au MSC et à la MGW ;
le MSC est configuré pour : transmettre les informations d'indication à la BSS lors de la détermination que la commutation locale est autorisée à être utilisée pour des appels établis et la nécessité des données vocales d'appel ;
la MGW est configurée pour : recevoir les données vocales d'appel transmises par la BSS et transmettre la trame silencieuse à la BSS ;
la BSS est configurée pour : recevoir les informations d'indication et effectuer la commutation locale en fonction des informations d'indication et transmettre les données vocales d'appel à la MGW ;
après que la BSS utilise la fonction de commutation locale, la BSS est configurée en outre pour recevoir et rejeter la trame silencieuse transmise par la MGW.

6. Système de communication mobile selon la revendication 5, dans lequel
le MSC est configuré en outre pour : après la transmission des informations d'indication à la BSS, transmettre des informations pour indiquer à la MGW de transmettre à trame silencieuse ou indiquer que la BSS a utilisé la fonction de commutation locale à la MGW ;
la MGW est configurée pour transmettre la trame silencieuse à la BSS en fonction des informations pour indiquer à la MGW de transmettre la trame silencieuse ou indiquer que la BSS a utilisé la fonction de commutation locale.

7. Système de communication mobile selon la revendication 5 ou 6, dans lequel une circonstance de nécessité pour le réseau central d'obtenir les données vocales d'appel comprend une interception légale.

8. Système de communication mobile selon la revendication 5 ou 6, dans lequel les informations d'indication sont un indicateur transmis par le biais d'un message existant ou d'un message nouvellement ajouté.
